# EUROPEAN PATENT APPLICATION

(11) **EP 1 693 259 A1**
(43) Date of publication of application: **23.08.2006**
(21) Application number: 04820146.1
(22) Date of filing: 30.11.2004
(51) Int. Cl.: B60R 25/10, B60B 3/16

(54) **DISENGAGEMENT DETECTING DEVICE AND METHOD**

(30) Priority: 09.12.2003 JP 2003409878
(71) Applicant: OMRON CORPORATION, Kyoto-shi, Kyoto 600-8530 (JP)
(72) Inventor: OTSUKI, Y., c/o OMRON Corp., 801 Minami fudodo-cho, Kyoto-shi, Kyoto 6008530 (JP)
(74) Representative: Calderbank, Thomas Roger
(86) International application number: PCT/JP2004/017765
(87) International publication number: WO 2005/056353

(57) **Abstract**

The present invention relates to a disengagement detection device and method capable of detecting the disengagement of a wheel from a vehicle easily and reliably. A magnetic sensor 11 detects the magnetism naturally accumulated in a space inside a vehicle at or near a wheel mounted on the vehicle. A control unit 21 determines, for each prescribed interval, the average value of the output sensor data based on the magnetism detected with the magnetic sensor 11, judges that the wheel disengaged from the vehicle when the average value of the sensor data fluctuates by a prescribed threshold value or more and thereafter stabilizes at a value that is not in a stationary state, and controls the output unit 13 so as to output a disengagement notification signal to the outside. The present invention may be employed in antitheft devices for car wheels.

## Description

### TECHNICAL FIELD

The present invention generally relates to a disengagement detection device and method, and particularly to a disengagement detection device and method capable of detecting the disengagement of a wheel from a vehicle easily and reliably.

### BACKGROUND ART

In recent years, incidents where wheels in a state with tires fitted thereon being stolen are increasing, and sensors for preventing such theft are commercially available. As such antitheft sensor, there is a type that uses an inclination sensor for detecting the tilting of the vehicle to detect the theft of a wheel by detecting the tilting of the vehicle when it is jacked up by the thief stealing the wheel.

Further, a method has been proposed for installing a contact sensor to the vehicle so as to contact the surface of the tire while the car is parked and detecting the theft of a tire by detecting that the tire has been disengaged from the contact sensor, as well as detecting that the contact sensor itself has been moved in order to prevent the tire from being stolen in a state with the contact sensor being in contact with the tire (e.g., Patent Document 1). [Patent Document 1] Japanese Patent Laid-Open Publication No. 2002-037029

### DISCLOSURE OF THE INVENTION

Nevertheless, in recent years, the tactics used by thieves are becoming astute, and there are many cases where wheels are stolen by raising, but not tilting, the vehicle such as by placing blocks or bricks under the vehicle and thereafter deflating the tires, or simultaneously jacking up four locations near the tires of the vehicle. In these cases, it is difficult for conventional antitheft sensors employing an inclination sensor to detect the theft of wheels.

Further, with the invention described in Patent Document 1, the antitheft sensor needs to be mounted on the vehicle each time the car is parked, and this is an extremely troublesome task for the user. Moreover, since the antitheft sensor is exposed outside in a state of being mounted on the vehicle, there is a problem in that it may be destroyed to prevent such sensor from operating.

The present invention was devised in view of the foregoing circumstances, and an object thereof is to enable the detection of the disengagement of a wheel from a vehicle easily and reliably.

The first disengagement detection device according to the present invention comprises: a detection means for detecting the magnetism inside the vehicle at or near the wheel mounted on the vehicle; and a judgment means for judging the disengagement of the wheel from the vehicle based on whether the value of the magnetism detected with the detection means changed by a prescribed threshold value or more, and whether a first stable state centered around a first value changed to a second stable state centered around a second value.

With the first disengagement detection device of the present invention, the detection means detects the magnetism inside the vehicle at or near the wheel mounted on the vehicle; and the judgment means judges the disengagement of the wheel from the vehicle based on whether the value of the magnetism detected with the detection means changed by a prescribed threshold value or more, and whether a first stable state centered around a first value changed to a second stable state centered around a second value.

Therefore, the disengagement of the wheel from the vehicle can be detected easily and reliably.

The detection means, for example, is constituted from a highly sensitive magnetic sensor capable of detecting earth magnetism, and the judgment means is constituted from a judgment unit for judging the disengagement of the wheel from the vehicle based on whether the magnetism inside the vehicle at or near the wheel changed significantly in comparison to the width of change in a stable state, and whether it became stable in such changed state.

The detection means may detect magnetisms in a plurality of different directions, and the judgment means may judge the disengagement of the wheel from the vehicle based on the comparison of the value of the magnetisms detected with the detection means, and the distribution of the value of the magnetisms detected previously with the detection means in a state where the wheel is mounted on the vehicle.

As a result, the disengagement of the wheel from the vehicle can be detected easily and reliably.

The second disengagement detection device according to the present invention comprises: a detection means for detecting magnetisms in a plurality of different directions inside the vehicle at or near the wheel mounted on the vehicle; and a judgment means for judging the disengagement of the wheel from the vehicle based on the comparison of the value of the magnetisms detected with the detection means, and the distribution of the value of the magnetisms detected previously with the detection means in a state where the wheel is mounted on the vehicle.

With the second disengagement detection device of the present invention, the detection means detects magnetisms in a plurality of different directions inside the vehicle at or near the wheel mounted on the vehicle; and the judgment means judges the disengagement of the wheel from the vehicle based on the comparison of the value of the magnetisms detected with the detection means, and the distribution of the value of the magnetisms detected previously with the detection means in a state where the wheel is mounted on the vehicle.

Therefore, the disengagement of the wheel from the vehicle can be detected easily and reliably.

The detection means, for example, is constituted from a highly sensitive magnetic sensor capable of detecting earth magnetism, and the judgment means is constituted from a judgment unit for judging the disengagement of the wheel from the vehicle based on whether the magnetism inside the vehicle at or near the wheel became a value different from the distribution in a state where the wheel is mounted.

The first disengagement detection device and second disengagement detection device of the present invention may further comprise a notification means for notifying that the disengagement of the wheel from the vehicle has been detected.

As a result, the disengagement of the wheel from the vehicle detected with the first disengagement detection device and second disengagement detection device can be notified outside.

The notification means, for example, is constituted from a radio.

The first disengagement detection method according to the present invention for detecting the disengagement of a wheel from a vehicle comprises: a detection step for detecting the magnetism inside the vehicle at or near the wheel mounted on the vehicle; and a judgment step for judging the disengagement of the wheel from the vehicle based on whether the value of the magnetism detected by the processing in the detection step changed by a prescribed threshold value or more, and whether a first stable state centered around a first value changed to a second stable state centered around a second value.

This detection step, for example, is constituted from a detection step for acquiring sensor data based on the magnetism inside the vehicle at or near the wheel mounted on the vehicle detected with the magnetic sensor, and the judgment step, for instance, is constituted from a judgment step for judging the disengagement of the wheel from the vehicle based on whether the value of the acquired sensor data changed significantly in comparison to the width of change in a state where the magnetism is stable, and whether it become state in such changed value.

The second disengagement detection method according to the present invention for detecting the disengagement of a wheel from a vehicle comprises: a detection step for detecting magnetisms in a plurality of different directions inside the vehicle at or near the wheel mounted on the vehicle; and a judgment step for judging the disengagement of the wheel from the vehicle based on the comparison of the value of the magnetisms detected by the processing in the detection step, and the distribution of the value of the magnetisms detected previously by the processing in the detection step in a state where the wheel is mounted on the vehicle.

This detection step, for example, is constituted from a detection step for acquiring sensor data based on the magnetism inside the vehicle at or near the wheel mounted on the vehicle detected with the magnetic sensor, and the judgment step, for instance, is constituted from a judgment step for judging the disengagement of the wheel from the vehicle based on whether the value of the acquired sensor data became a value different from the distribution in a state where the wheel is mounted.

According to the present invention, the disengagement of the wheel from the vehicle can be detected. Particularly, according to the present invention, the disengagement of the wheel from the vehicle can be detected easily and reliably without requiring the user to engage in special operations on a case-by-case basis.

### BRIEF DESCRIPTION OF THE DRAWINGS

Fig. 1 is a block diagram showing the hardware configuration of an embodiment of the disengagement detection device employing the present invention;
Fig. 2 is a block diagram showing a functional configuration example of the control unit illustrated in Fig. 1;
Fig. 3 is a diagram showing an installation example of the disengagement detection device illustrated in Fig. 1;
Fig. 4 is a diagram showing an example of the sensor data to be output from the magnetic sensor;
Fig. 5 is a diagram showing an example of the distribution of the sensor data to be output from the magnetic sensor;
Fig. 6 is a diagram showing an example of the distribution of the sensor data to be output from the magnetic sensor;
Fig. 7 is a flowchart for explaining the disengagement detection processing based on the fluctuation detection system in the disengagement detection device illustrated in Fig. 1;
Fig. 8 is a flowchart for explaining the disengagement detection processing based on the fluctuation detection system in the disengagement detection device illustrated in Fig. 1;
Fig. 9 is a block diagram showing the hardware configuration of an embodiment of the disengagement detection device employing the present invention;
Fig. 10 is a block diagram showing a functional configuration example of the control unit illustrated in Fig. 9;
Fig. 11 is a flowchart for explaining the disengagement detection processing based on the distribution data detection system in the disengagement detection device illustrated in Fig. 9;
Fig. 12 is a flowchart for explaining the disengagement detection processing based on the distribution data detection system in the disengagement detection device illustrated in Fig. 9;
Fig. 13 is a flowchart for explaining the disengagement detection processing based on the combination detection system in the disengagement detection device illustrated in Fig. 9; and
Fig. 14 is a flowchart for explaining the disengagement detection processing based on the combination detection system in the disengagement detection device illustrated in Fig. 9.

### [List of Elements]

- 1: disengagement detection device
- 11: magnetic sensor
- 12: microcomputer
- 13: output unit
- 14: input unit
- 21: control unit
- 22: memory unit
- 23: ROM
- 31: data processing unit
- 32: judgment unit
- 41: tire housing
- 42: floor
- 43: axle
- 101: disengagement detection device
- 112: microcomputer
- 114: input unit
- 121: control unit
- 131: learning processing unit
- 132: judgment unit

### BEST MODE FOR CARRYING OUT THE INVENTION

Embodiments of the present invention are now explained with reference to the drawings.

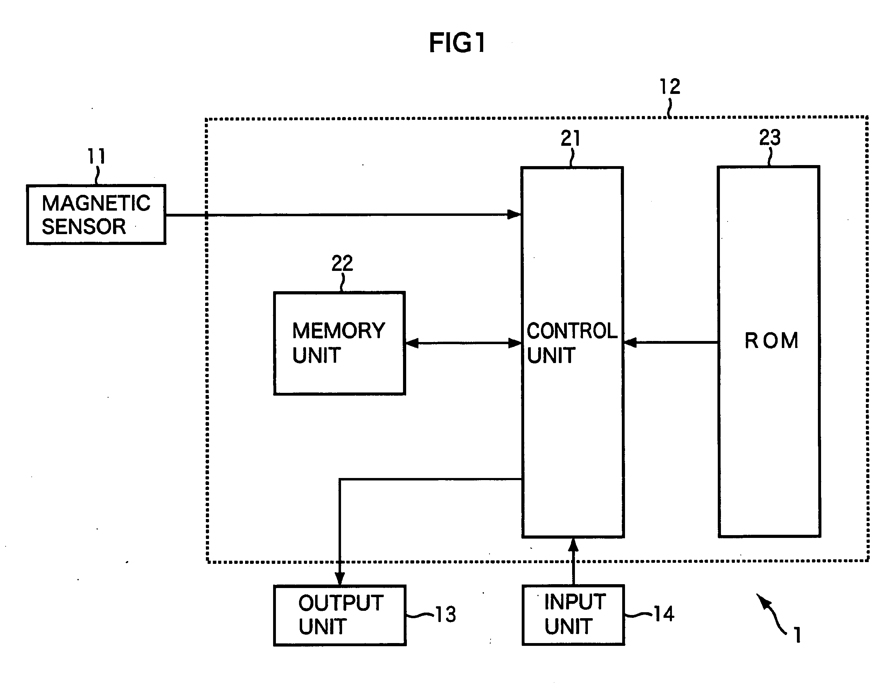

Fig. 1 is a diagram representing the hardware configuration of a disengagement detection device 1 employing the present invention.

The disengagement detection device 1 is constituted from a magnetic sensor 11, a microcomputer 12, an output unit 13, and an input unit 14.

The magnetic sensor 11, for example, has a built-in MI (Magnet Impedance) element, and detects magnetism. The MI element is used for detecting magnetism by utilizing the MI effect in which the magnetism impedance changes significantly based on the strength of the outside magnetic field when a high frequency current is applied to a magnetic sensitive medium such as amorphous, and it is also capable of detecting earthmagnetism (i.e., it is capable of detecting the absolute bearing). The magnetic sensor 11 comprises two such highly sensitive sensors, and the respective sensors detect magnetism in the mutually intersecting biaxial direction (hereinafter, one direction is referred to as the x axis direction, and the other direction is referred to as the y axis direction).

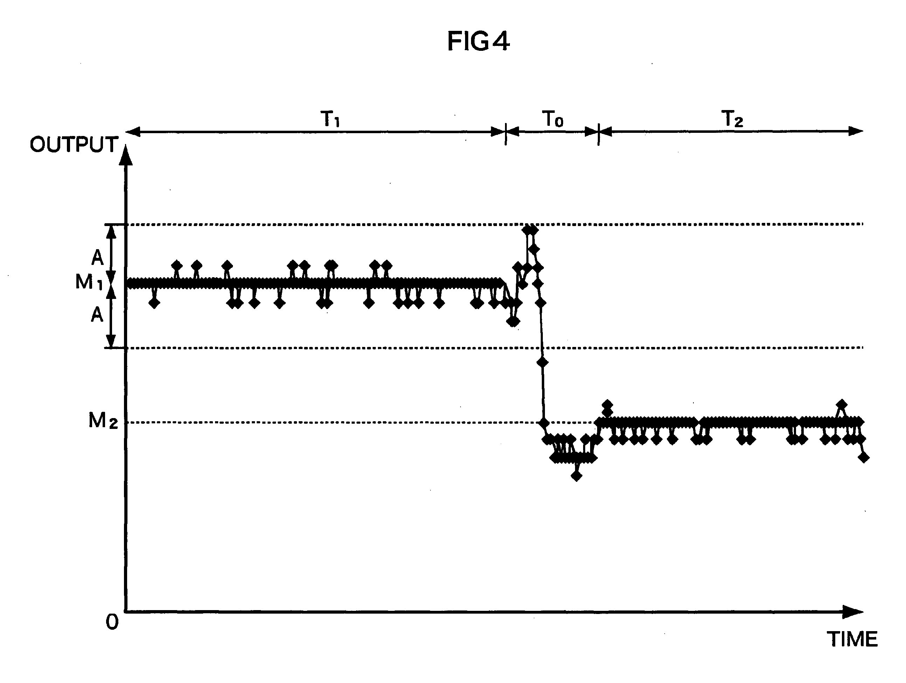

The magnetic sensor 11 detects the biaxial direction magnetism as the size of the magnetic flux density with milligauss as the unit thereof. Therefore, in the example of the sensor data output from the magnetic sensor 11 illustrated later in Fig. 4 to Fig. 6, the value of the sensor data is the value of the magnetic flux density with milligauss as the unit thereof. Needless to say, the magnetic sensor 11 may also detect the biaxial direction magnetism as the strength of the magnetic field with ampere per meter or Newton per Weber as the unit thereof. Further, the magnetic sensor 11 may also detect magnetism in triaxial directions or more.

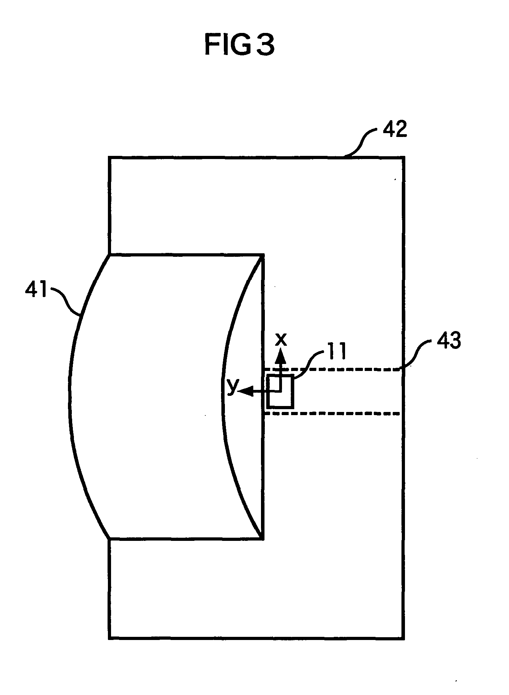

The magnetic sensor 11, as described later with reference to Fig. 3, is installed inside the vehicle adjacent to the tire housing that is roughly directly overhead the axle, and detects the magnetism of the space inside the vehicle that is naturally accumulating at and near the wheel (hereinafter referred to as the wheel vicinity) in vehicle. The magnetic sensor 11 supplies to a microcomputer 12 the sensor data based on the detected magnetism.

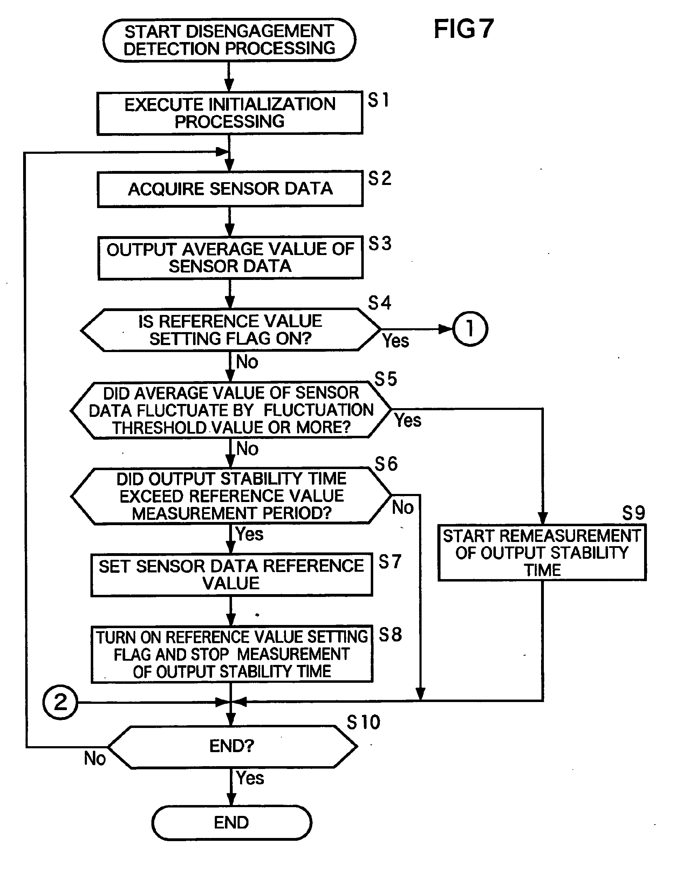

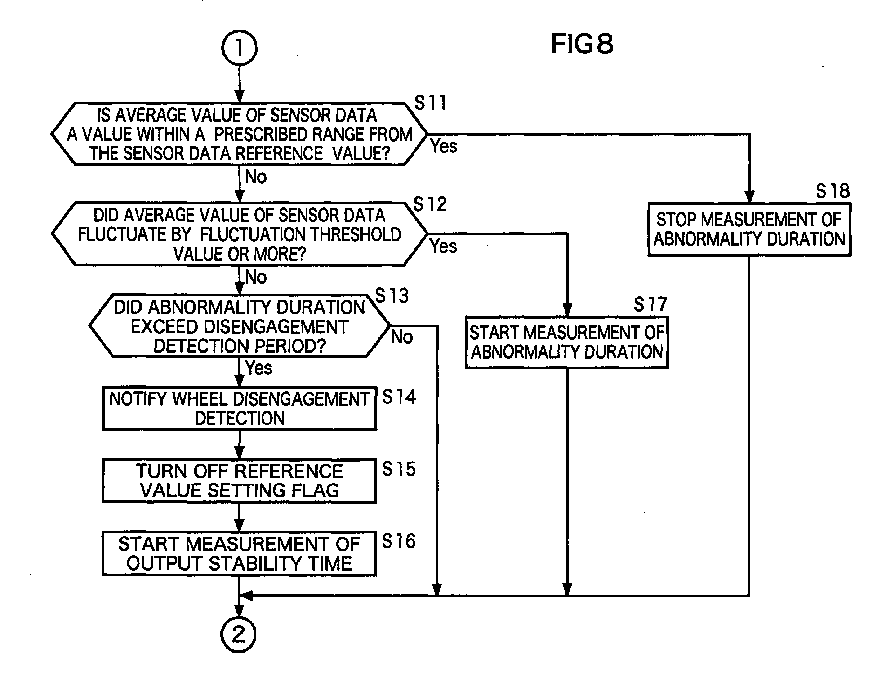

The microcomputer 12, as described later with reference to Fig. 7 and Fig. 8, detects the disengagement of a wheel by detecting the change of magnetism of the wheel vicinity based on the sensor data supplied from the magnetic sensor 11. When the microcomputer 12 detects the disengagement of a wheel, it controls the output unit 13 and outputs a disengagement notification signal for notifying the disengagement of the wheel.

The output unit 13 outputs via wireless transmission the disengagement notification signal outside the disengagement detection device 1 based on the control from the microcomputer 12. The output unit 13 may, in addition to transmitting the disengagement notification signal, emitting a warning sound or light for notifying the disengagement of the wheel to the outside.

The input unit 14 is to be operated by a user, and it outputs the command from the user to the microcomputer 12. For example, the user may operate the input unit 14 to command the ON or OFF of the wheel disengagement detection processing (hereinafter simply referred to as the disengagement detection processing) so as to start the disengagement detection processing, or stop the disengagement detection processing when it is not necessary to perform this disengagement detection processing such as while driving or changing wheels. For instance, a switch or the like may be provided as the input unit 14, and, by turning such switch ON and OFF, the ON and OFF of processing may be output thereby.

The microcomputer 12 has a control unit 21, a memory unit 22, and a ROM 23.

The control unit 21 constituted from the likes of a CPU (Central Processing Unit) and RAM (Random Access Memory), as described later with reference to Fig. 7 and Fig. 8, performs the wheel disengagement detection processing based on a program or the like read out from a ROM 23. The control unit 21 stores the sensor data supplied from the magnetic sensor 11 in a memory unit 22 constituted from the likes of a semiconductor memory, and, based on the sensor data stored in the memory unit 22, stores in the memory unit 22 the average value of the sensor data sought in each prescribed interval (e.g., 1 second). The control unit 21 detects the disengagement of the wheel by detecting the change of magnetism in the wheel vicinity based on the average value of the sensor data. The control unit 21 outputs the detection result to the output unit 13 when it detects the disengagement of the wheel.

The ROM 23 stores programs and data prestored as the factory default, and supplies the requested program or data to the control unit 21.

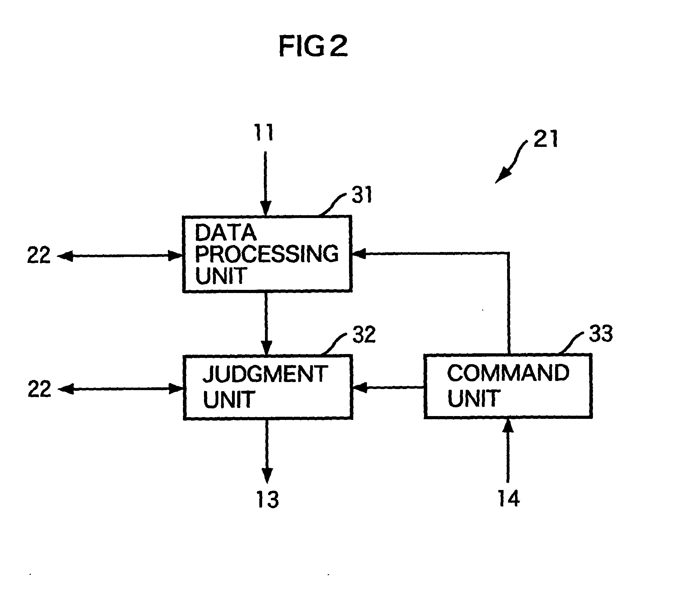

Fig. 2 is a block diagram showing a functional configuration example of the control unit 21.

The control unit 21 is constituted from a data processing unit 31, a judgment unit 32, and a command unit 33.

The data processing unit 31 stores the sensor data supplied from the magnetic sensor 11 in the memory unit 22, determines the average value of the sensor data for each prescribed interval (e.g., 1 second) based on the sensor data stored in the memory unit 22, and supplies this to the judgment unit 32.

The judgment unit 32 stores the average value of the sensor data supplied from the data processing unit 31 in the memory unit 22. The judgment unit 32, after the disengagement detection processing is started, determines the value of the sensor data (hereinafter referred to as the sensor data reference value) in a state where the average value of the sensor data output from the magnetic sensor 11 is in a stable state (hereinafter referred to as the stationary state). The judgment unit 32, as described later with reference to Fig. 7 and Fig. 8, judges whether the wheel has disengaged by detecting whether the magnetism in the wheel vicinity changed from a stationary state based on the variation in the average value of the sensor data, and the difference between the average value of the sensor data and the sensor data reference value. The judgment unit 32 outputs the detection result to the output unit 13 when it judges that the wheel disengaged. Further, [the judgment unit 32] also manages the reference value setting flag which represents whether the sensor data reference value has been set or not. Further, the judgment unit 32 has a built-in timer (not shown), and measures the output stability time and abnormality duration described later.

The command unit 33 acquires a command from the user via the input unit 14, and controls the data processing unit 31 and judgment unit 32 based on such command.

Fig. 3 is a diagram showing an example of the installation position of the magnetic sensor 11. Fig. 3 is a plan view of the left side in the trunk room at the rear of the vehicle. A half-column tire housing 41 is protruding from the left end side of the floor 42 inside the trunk room, and, below the tire housing 41, a left rear tire not shown is mounted on the vehicle in a state where the wheel is fitted therein. Below the floor 42, an axle 43 to which the wheel (tire) not shown is mounted is passing through from near the center of the right end of the tire housing 41 in the horizontal rightward direction.

The magnetic sensor 11, for example, as shown in Fig. 3, is installed at a position above the floor adjacent near the center of the right end side of the tire housing 41. In the example illustrated in Fig. 3, the magnetic sensor 11, as shown with the arrows, is installed in a plane (horizontal plane) that is parallel with the floor 42 (ground), and roughly perpendicular to the x axis direction to become the forward direction of the vehicle and the y axis direction, so as to detect the biaxial direction magnetism of the y axis direction oriented toward the left side of the vehicle. The magnetic sensor 11 is fixed to the floor 42 of the trunk room with a double-sided tape or face fastener.

The magnetic sensor 11 is desirably installed to a position near the tire housing 41 (wheel and tire) as much as possible and immediately above the axle 43 passing below the floor 42 in order to reliably detect the change of magnetism naturally accumulated in the wheel and tire. Although an aluminum wheel will not be magnetized, certain aluminum wheels have parts constituted from an injection valve or other metals that will be magnetized, and the wire built in the tire is also constituted from a material that will be magnetized. The axle 43 will also be magnetized. Since the magnetism obtained comprehensively by such magnetization will be detected, it is desirable that the magnetic sensor 11 is disposed in this position. Further, the magnetic sensor 11 for detecting the disengagement of wheels in other positions of the vehicle is preferably installed at similar positions

As described above, by installing the magnetic sensor 11 inside the vehicle, it is possible to prevent the magnetic sensor 11 from being destroyed or removed. Further, when the disengagement detection device 1 containing the magnetic sensor 11, microcomputer 12, output unit 13, and input unit 14 is to be constituted integrally, wiring will not be necessary, and the disengagement detection device 1 itself can be easily installed inside the vehicle merely by disposing it near the right side end of the tire housing 41. Incidentally, in the following explanation, the disengagement detection device 1 is explained as integrally constituting the magnetic sensor 11, microcomputer 12, output unit 13, and input unit 14.

Fig. 4 is a diagram showing an example of the sensor data output from the sensor for detecting the magnetism in the x axis direction of the magnetic sensor 11 when the wheel is removed from the vehicle in a state where the disengagement detection device containing the magnetic sensor 11 is disposed at the position illustrated in Fig. 3. In Fig. 4, the horizontal axis represents time, and the vertical axis represents the value of sensor data (unit: milligauss). The wheel is removed from the vehicle during the period represented with section T0 in Fig. 4.

As shown in Fig. 4, in section T1 before section T0 where the wheel is removed, the value of sensor data is in a stable state (stationary state) roughly at M1. In other words, in this state, the variation width of the value of sensor data is small. Meanwhile, in section T2 after section T0 where the wheel is removed, the sensor data is in a stable state at value M2 that is different from value M1. In other words, before the wheel is removed, the magnetism in the wheel vicinity that was stable at the first value M1 changes significantly in comparison to the variation width in a stationary state as a result of the wheel being removed, and becomes stable at the second value M2 that is different from the state before the wheel was removed.

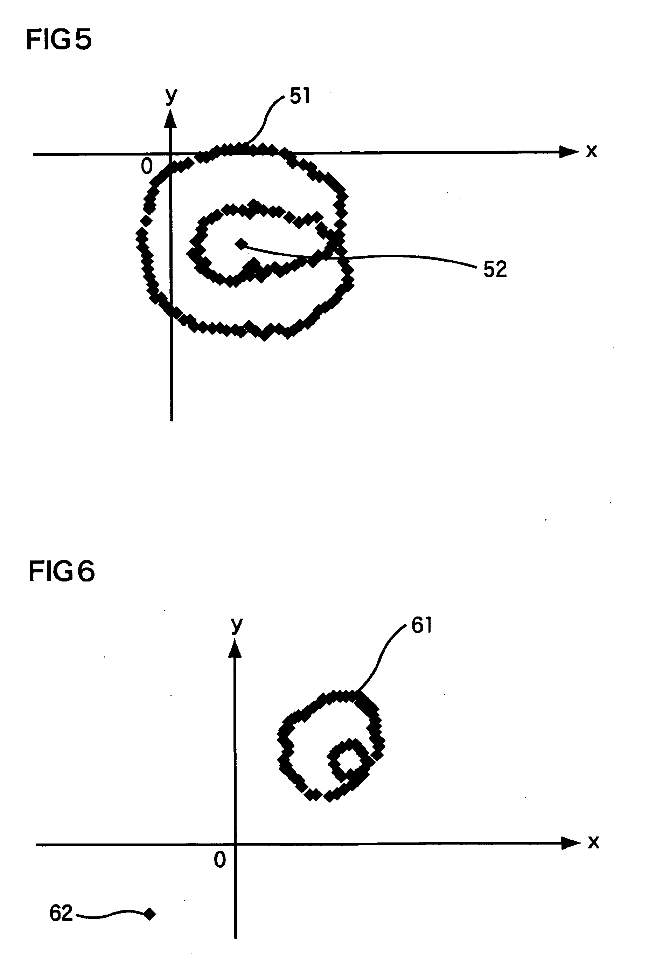

Fig. 5 is a diagram showing, in a state where the disengagement detection device 1 containing the magnetic sensor 11 is disposed at the position illustrated in Fig. 3, an example of the distribution of the sensor data output from the magnetic sensor 11 when an aluminum wheel is mounted on the vehicle and the tire (aluminum wheel) is rotated once, and the value of sensor data output from the magnetic sensor 11 in a state where the aluminum wheel is removed from the vehicle. In Fig. 5, the horizontal axis represents the value of sensor data (unit: milligauss) in the x axis direction of the magnetic sensor 11, and the vertical axis represents the value of sensor data (unit: milligauss) in the y axis direction of the magnetic sensor 11. The curve 51 plots on the graph of Fig. 5 the result of continuously measuring the value of the x axis direction and y axis direction of the sensor data output from the magnetic sensor 11 while rotating the tire (aluminum wheel) once. The point 52 plots on the graph of Fig. 5 the value of the x axis direction and y axis direction of the sensor data output from the magnetic sensor 11 in a state where the aluminum wheel is removed.

The curve 51 continuously changes pursuant to the rotation of the tire (aluminum wheel), returns to its original position for each rotation, and becomes a closed curve formed from inner and outer double circles. In other words, when the vehicle is stopped, the value of sensor data will become a value corresponding to one of the points on the curve 51 according to the relative position of the tire (aluminum wheel) in relation to the vehicle.

Meanwhile, when the aluminum wheel is removed, the value detected with the magnetic sensor 11 with be a value represented with the point 52 (that is discontinuous with the curve 51) separated a certain distance or more from any point on the curve 51. In other words, regardless of the rotating position of the aluminum wheel, when the aluminum wheel is removed, the magnetism in the wheel vicinity detected with the magnetic sensor 11 will change by a certain value or more, and the value after such change will become a value that is different from the value (distribution) at the time the aluminum wheel was installed.

Fig. 6 is a diagram showing, in a state where the disengagement detection device 1 containing the magnetic sensor 11 is disposed at the position illustrated in Fig. 3 upon installing a steel wheel instead of an aluminum wheel to a different vehicle from the one where the sensor data was measured as shown in Fig. 5, an example of the distribution of the sensor data output from the magnetic sensor 11 when an aluminum wheel is mounted on the vehicle and the tire (steel wheel) is rotated once, and the value of sensor data output from the magnetic sensor 11 in a state where the steel wheel is removed from the vehicle.

As with Fig. 5, the curve 61 represents the distribution of the sensor data output from the magnetic sensor 11 when an aluminum wheel is mounted on the vehicle and the tire (steel wheel) is rotated once, and the point 62 represents the value of sensor data output from the magnetic sensor 11 in a state where the steel wheel is removed from the vehicle. In the case of a steel wheel, as with the case of an aluminum wheel, the curve 61 continuously changes pursuant to the rotation of the tire (steel wheel), returns to its original position for each rotation, and becomes a closed curve formed from inner and outer double circles. Further, in the case of a steel wheel, in comparison to the case of an aluminum wheel, the distance between the curve 61 and point 62 is far. In other words, the change in value of the sensor data as a result of removing the steel wheel is greater.

As described with reference to Fig. 4 to Fig. 6, the sensor data output from the magnetic sensor 11 will change significantly in comparison to the fluctuation range in a stationary state, regardless of the rotating position of the wheel, when the wheel is removed from the vehicle (magnetism in the wheel vicinity changes significantly in comparison to the change in a stationary state), and becomes stable at the value after fluctuation. The disengagement detection device 1 detects the disengagement of the wheel from the vehicle by detecting the change of magnetism in the wheel vicinity before and after the wheel is removed. This detection system is hereinafter referred to as the fluctuation detection system.

Incidentally, since the disengagement detection device 1 detects the disengagement of the wheel based on the magnetism naturally accumulated in the wheel vicinity, no special operation such as the user actively magnetizing the wheel with a magnet for detecting the disengagement of the wheel will be required.

Next, the disengagement detection processing of the fluctuation detection system to be executed with the disengagement detection device 1 is explained with reference to the flowcharts illustrated in Fig. 7 and Fig. 8. Incidentally, this processing is started when the user commands the start of the disengagement detection processing via the input unit 14.

At step 1, the initialization processing is executed. Specifically, the judgment unit 32 turns OFF the reference value setting flag representing whether the sensor data reference value has been set, activates the timer, and starts measuring the output stability time. The judgment unit 32 measures the time where the variation in the average value of sensor data continues to be stable in a state less than a prescribed threshold value (hereinafter referred to as the fluctuation threshold value).

At step S2, the data processing unit 31 acquires the sensor data based on the magnetism in the wheel vicinity detected with the magnetic sensor 11 from the magnetic sensor 11, and stores this in the memory unit 22.

At step S3, the data processing unit 31 determines the average value of the sensor data (sensor data for 1 second) stored in the memory unit 22 for each prescribed period (e.g., 1 second), and outputs such value to the judgment unit 32. The judgment unit 32 stores the average value of the output sensor data in the memory unit 22.

At step S4, the judgment unit 32 judges whether the reference value setting flag is ON. Here, since the reference value setting flag is OFF in the initialization processing at step S1, the processing proceeds to step S5.

At step S5, the judgment unit 32 compares the average value of the latest sensor data computed with the processing at step S3 and the average value of the sensor data computed with the processing at the previous step S3, and judges whether the average value of the sensor data in at least one direction among the x axis direction and y axis direction has fluctuated by the preset fluctuation threshold value or more. Here, since the first processing at step S3 was just performed and the average value of the previous sensor data has not yet been stored in the memory unit 22, it will be judged that the average value of the sensor data has not fluctuated by the fluctuation threshold value or more, and the processing will proceed to step S6. Incidentally, at step S5, as a result of comparing the average value of the sensor data, malfunctions in the value of sensor data caused by the noise components fluctuating instantaneously can be suppressed. Therefore, when there is not much noise, the average value computation processing at step S53 may be omitted.

At step S6, the judgment unit 32 judges whether the output stability time being measured has exceeded a prescribed period (e.g., 30 seconds) (hereinafter referred to as the reference value measurement period). Here, since the processing has just begun, it will be judged that the output stability time has not exceeded the reference value measurement period, the processing of steps S7 and S8 will be skipped, and the processing will proceed to step S10.

At step S10, the command unit 33 determines whether to end the disengagement detection processing; that is, it determines whether the user commanded the end of the disengagement detection processing via the input unit 14. When the user commands the end of the disengagement detection processing, the disengagement detection processing is ended, and, when the user did not command the end of the disengagement detection processing, the processing returns to step S2. In the following explanation, unless specifically indicated, a case is explained where the user did not command the end of the disengagement detection processing at step S10, and the processing returns to step S2.

Thereafter, at step S6, the foregoing processing is repeated until the output stability time is judged as exceeding the reference value measurement period; that is, until the period where the average value of the sensor data fluctuates stably within a range less than the fluctuation threshold value continues during the reference value measurement period. Nevertheless, at step S5, when the average value of the sensor data in at least one direction among the x axis direction and y axis direction is judged as fluctuating by the fluctuation threshold value or more, the processing proceeds to step S9, and the judgment unit 32 resets the timer, and starts remeasuring the output stability time.

At step S6, when it is judged that the output stability time exceeds the reference value measurement period, the processing proceeds to step S7, and the judgment unit 32 sets the sensor data reference value. The judgment unit 32 determines the further average value (average value in the reference value measurement period) of the average value of the sensor data stored in the memory unit 22 during the reference value measurement period in which the average value of the sensor data became stable, and sets such value to the sensor data reference value. In other words, the sensor data reference value is the average value (value M1) of the sensor data output from the magnetic sensor 11 in section T1 of a stationary state before section T0 where the wheel is removed as shown in the graph of Fig. 4.

At step S8, the judgment unit 32 turns ON the reference value setting flag representing that the sensor data reference value has been set, stops the timer, and stops the measurement of the output stability time. Thereafter, the processing proceeds to step S10, then returns to step S2.

After the sensor data reference value is set, pursuant to the processing at steps S2 and S3, after the average value of the sensor data is output from the data processing unit 31 to the judgment unit 32 based on the sensor data output from the magnetic sensor 11, at step S4, it is judged that the reference value setting flag is ON, and the processing proceeds to step S11.

At step S11, the judgment unit 32 judges whether the average value of the latest sensor data computed with the processing at step S3 is a value within a prescribed range (M1 ± A) centered around the sensor data reference value with respect to both directions of the x axis direction and y axis direction (whether it is in the first stationary state within the width A centered around value M1). When the average value of the sensor data is a value within a prescribed range centered around the sensor data reference value with respect to both directions of the x axis direction and y axis direction, it is judged that the average value of the sensor data (magnetism in the wheel vicinity) is in a stationary state, and the processing proceeds to step S18.

At step S18, the judgment unit 32, in the case of measuring the abnormality duration described later, stops the timer and stops the measurement of the abnormality duration. Thereafter, the processing proceeds to step S10, returns to step S2, and the subsequent processing steps are repeated.

At step S11, when it is judged that the average value of the sensor data in at least one direction among the x axis direction and y axis direction is a value outside the prescribed range centered around the sensor data reference value, the average value of the sensor data (magnetism in the wheel vicinity) will not be in a stationary state, and the processing proceeds to step S12.

At step S12, the judgment unit 32 compares the average value of the latest sensor data and the average value of the previous sensor data stored in the memory unit 22, and judges whether the average value of the sensor data of at least one direction among the x axis direction and y axis direction fluctuated by the preset fluctuation threshold value or more. This fluctuation threshold value, for instance, may be a value that is 0.8 times the absolute value of the difference of values M1 and M2 (0.8 × |M1 - M2|). When it is judged that the average value V of the sensor data of at least one direction among the x axis direction and y axis direction fluctuates by the fluctuation threshold value or more; that is, when it is a value outside the prescribed range (not a stationary state) centered around the sensor data reference value (a value smaller than M1 - A or greater than M1 + A), and the average value V of the sensor data fluctuates by the fluctuation threshold value or more (fluctuation range (|M1 - V|) is greater than (0.8 × |M1 - M2|)), the processing proceeds to step S17.

At step S17, the judgment unit 32 activates the timer, and starts measuring the abnormality duration. The judgment unit 32, based on this abnormality duration, measures the time where, while the average value of the sensor data is not in a stationary state, the variation in the average value of the sensor data continues to be in a stable state less than the fluctuation threshold value (second stationary state within the range of width B (fluctuation threshold value) centered around value M2); that is, the time the magnetism in the wheel vicinity becomes stable in a non-stationary state. Thereafter, the processing proceeds to step S10, returns to step S2, and the subsequent processing steps are repeated.

At step S12, when it is judged that neither average value of the sensor data of both directions of the x axis direction and y axis direction has fluctuated by the fluctuation threshold value or more; that is, when the average value V of the sensor data is a value outside the prescribed range (M1 ± A) centered around the sensor data reference value M1, but has not fluctuated by the fluctuation threshold value or more (when the fluctuation range (|M1 - V|) is smaller than (0. 8 × |M1 - M2|)), the processing proceeds to step S13.

At step S13, the judgment unit 32 judges whether the abnormality duration exceeded a prescribed period (hereinafter referred to as the disengagement detection period). When the measurement of the abnormality duration has not started, or when the disengagement detection period has not elapsed from the point when the measurement of abnormality duration was started, it is judged that the abnormality duration has not exceeded the disengagement detection period, and the processing at steps S14 to S16 is skipped, the processing proceeds to step S10, thereafter returns to step S2, and the subsequent processing steps are repeated.

At step S13, when it is judged that the abnormality duration exceeded the disengagement detection period; that is, when the average value V of the sensor data of at least one direction among the x axis direction and y axis direction fluctuates by the fluctuation threshold value (0.8 × |M1 - M2|) or more, becomes a value outside the prescribed range centered around the sensor data reference value, and, while remaining at the value outside the prescribed range centered around the sensor data reference value, and a stable period in which the fluctuation range of the average value is less than the fluctuation threshold value (M2 ± B) continues during the disengagement detection period, for instance, as shown with section T2 after section T0 in Fig. 4, the magnetism in the wheel vicinity will change from M1 to M2 due to the disengagement of the wheel, and, when it is judges as being stable at value M2, the processing proceeds to step S14.

At step S14, the judgment unit 32 outputs a disengagement notification signal outside the disengagement detection device 1 via the output unit 13 (for notifying the user that the wheel has been stolen).

At step S15, the judgment unit 32 turns OFF the reference value setting flag, and, at step S16, the judgment unit 32 stops the measurement of the abnormality duration, and starts the measurement of the output stability time. Thereafter, the processing proceeds to step S10, thereafter returns to step S2, and the sensor data reference value setting processing is performed once again.

Incidentally, during the measurement of the abnormality duration, at step S12, when it is judged that the average value of the sensor direction of at least one direction among the x axis direction and y axis direction fluctuated by the fluctuation threshold value or more; that is, when the average value of the sensor data is fluctuating unstably in short cycles in a value outside the prescribed range centered around the sensor data reference value, it is judged that the magnetism in the wheel vicinity is unstable due to reasons (e.g., rotation of the tire) other than the disengagement of the wheel, and the processing proceeds to step S17, the timer is reset, and the remeasurement of the abnormality duration is started.

As described above, the magnetism in the wheel vicinity changing significantly in comparison to the stationary state due to the disengagement of the wheel based on the sensor data output from the magnetic sensor 11, and the disengagement of the wheel is detected by detecting that such changed state became stable.

Meanwhile, as shown in Fig. 5 and Fig. 6, the value of sensor data output from the magnetic sensor 11 changes periodically pursuant to the rotation of the tire (wheel) and represents a specific distribution on the one hand, and, when the wheel is removed from the vehicle, this will become a value that is different from the distribution of the value of sensor data in a state where the wheel is mounted on the vehicle. As a result of utilizing this characteristic, the disengagement of the wheel can also be detected by creating distribution data representing the distribution of the value of sensor data in a state where the wheel is mounted on the vehicle (hereinafter simply referred to as the distribution data), and comparing the value of sensor data output from the magnetic sensor 11 and the created distribution data. This detection system is hereinafter referred to as the distribution data detection system.

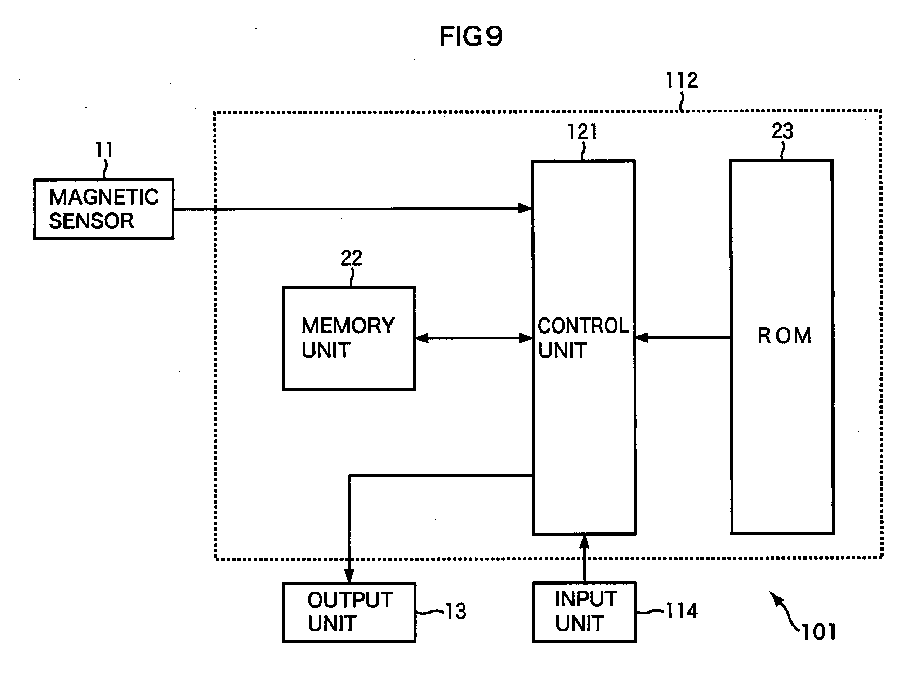

Fig. 9 is a diagram representing hardware configuration example of the disengagement detection device 101 employing the distribution data detection system. Incidentally, the components common with the disengagement detection device 1 of Fig. 1 given the same reference numeral, and redundant explanations will be omitted.

The disengagement detection device 101 is constituted from a magnetic sensor 11, a microcomputer 112, an output unit 13, and an input unit 114.

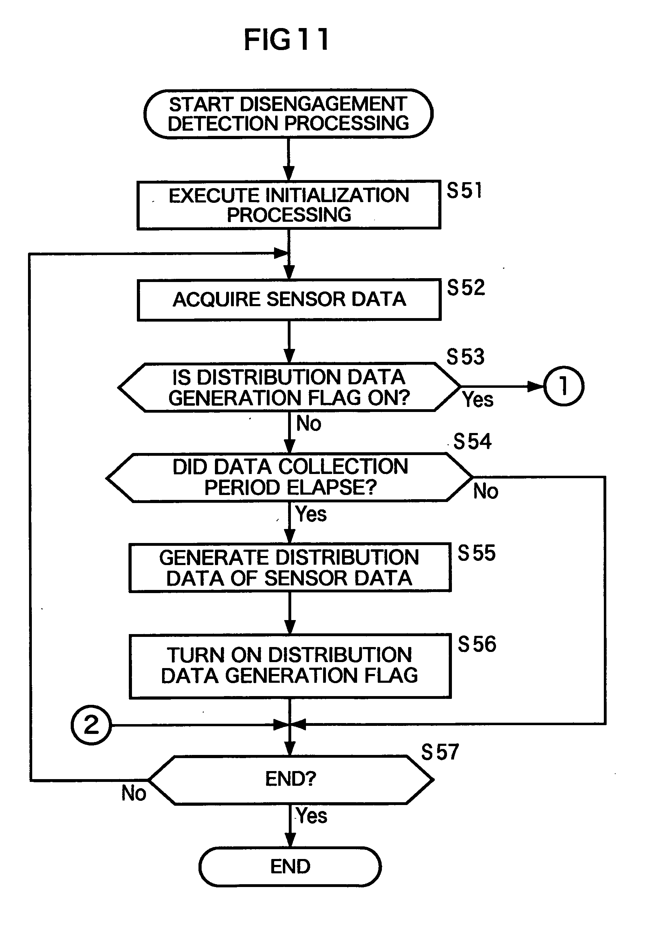

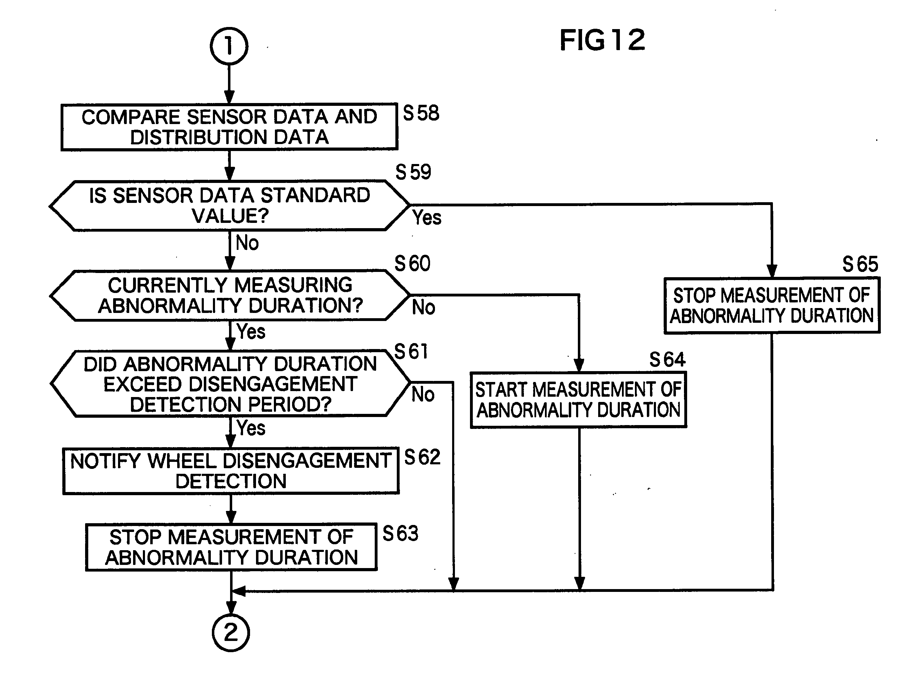

The microcomputer 112, as described later with reference to Fig. 11 and Fig. 12, creates distribution data based on the sensor data supplied from the magnetic sensor 11. And, the microcomputer 112 detects the disengagement of the wheel by comparing the sensor data supplied from the magnetic sensor 11 and the created distribution data. The microcomputer 112, upon detecting the disengagement of the wheel, controls the output unit 13 so as to output a disengagement notification signal notifying the disengagement of the wheel.

The input unit 114 is to be operated by a user, and it outputs the command from the user to the microcomputer 112. For example, the user may operate the input unit 114 to command the ON or OFF of the disengagement detection processing so as to start the disengagement detection processing, or stop the disengagement detection processing when it is not necessary to perform this disengagement detection processing such as while driving or changing wheels. Further, the user may operate the input unit 114 and command the renewal of the distribution data created previously. For instance, a switch or the like may be provided as the input unit 114, and, by turning such switch ON and OFF, the ON and OFF of processing may be output, or the command for renewing the distribution data may be output thereby.

The microcomputer 112 has a control unit 121, a memory unit 22, and a ROM 23.

The control unit 121 constituted from the likes of a CPU (Central Processing Unit) and RAM (Random Access Memory), as described later with reference to Fig. 11 and Fig. 12, performs the wheel disengagement detection processing based on a program or the like read out from a ROM 23. The control unit 121 stores the sensor data supplied from the magnetic sensor 11 in a memory unit 22 constituted from the likes of a semiconductor memory, and, based on the sensor data stored in the memory unit 22, determines the distribution data of the sensor data, and stores this in the memory unit 22. The control unit 121 detects the disengagement of the wheel by comparing the sensor data and distribution data. The control unit 121 outputs the detection result to the output unit 13 when it detects the disengagement of the wheel.

The ROM 23 stores programs and data prestored as the factory default, and supplies the requested program or data to the control unit 121.

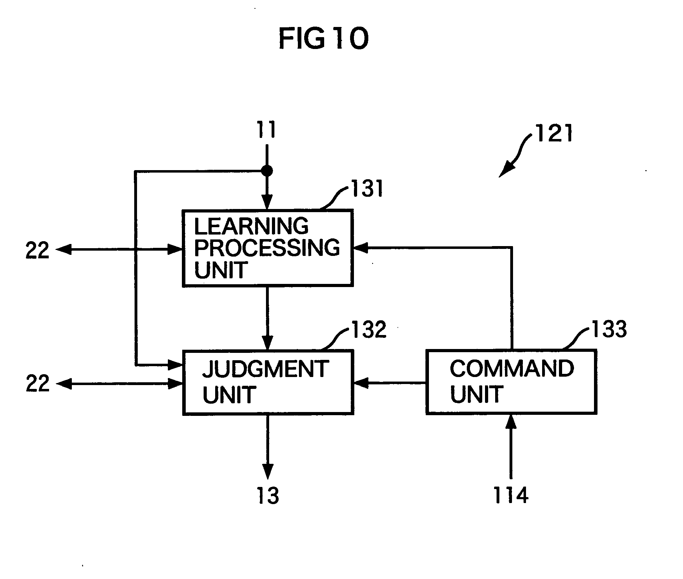

Fig. 10 is a block diagram showing a functional configuration example of the control unit 121.

The control unit 121 is constituted from a learning processing unit 131, a judgment unit 132, and a command unit 133.

The learning processing unit 131 stores the sensor data supplied from the magnetic sensor 11 in the memory unit 22 for a prescribed period (hereinafter referred to as the data collection period) from the start of the disengagement detection processing. The learning processing unit 131, as described later with reference to Fig. 11 and Fig. 12, creates distribution data based on the sensor data stored in the memory unit 22 at the point when the data collection period elapses from the start of disengagement detection processing, and supplies this to the judgment unit 132.

The judgment unit 132 stores the sensor data supplied from the magnetic sensor 11 and the distribution data supplied from the learning processing unit 131 in the memory unit 22 after the data collection period elapses from the start of disengagement detection processing. The judgment unit 132, as described later with reference to Fig. 11 and Fig. 12, judges whether the wheel has been disengaged by comparing the value of sensor data and distribution data.

The judgment unit 132, upon judging that the wheel has been disengaged, outputs the detection result thereof to the output unit 13. Further, the judgment unit 132 has a built-in timer (not shown) for measuring the abnormality duration.

The command unit 133 acquires a command from the user via the input unit 114, and controls the learning processing unit 131 and the judgment unit 132 based on such command. The command unit 133 manages the distribution data generation flag representing whether the distribution data has been created, and the learning processing unit 131 and judgment unit 132 switch and execute the processing before the creation of distribution data and the processing after the creation of distribution data based on the value of such flag.

Next, the processing executed with the disengagement detection device 101 is explained with reference to the flowcharts of Fig. 11 and Fig. 12. Incidentally, this processing is started when the user commands the start of the disengagement detection processing via the input unit 114.

At step 51, the initialization processing is executed. Specifically, the command unit 133 turns OFF the distribution data generation flag representing whether the distribution data was created. Nevertheless, after the disengagement detection processing is temporarily stopped, and the disengagement detection processing is resumed, when the user does not command the renewal of the distribution data via the input unit 114 (when using the distribution data created in the previous disengagement detection processing without change), the distribution data generation flag will be turned ON. In the following explanation, a case is explained where the distribution data generation flag is turned OFF at step S51.

At step S52, when the distribution data generation flag is OFF, the learning processing unit 131 acquires the sensor data based on the magnetism in the wheel vicinity detected with the magnetic sensor 11 from the magnetic sensor 11, and stores this in the memory unit 22. When the distribution data generation flag is ON, the judgment unit 132 acquires the sensor data based on the magnetism in the wheel vicinity detected with the magnetic sensor 11 from the magnetic sensor 11, and stores this in the memory unit 22. Here, since the distribution data generation flag is turned OFF in the initialization processing at step S1, the learning processing unit 131 acquires the sensor data from the magnetic sensor 11, and stores this in the memory unit 22.

At step S53, the command unit 133 judges whether the distribution data generation flag is ON. Here, since the distribution data generation flag is turned OFF in the initialization processing at step S1, the processing proceeds to step S54.

At step S54, the learning processing unit 131 judges whether the data collection period (e.g., 1 day) has elapsed from the start of disengagement detection processing. Here, since the disengagement detection processing has just started, it is judged that the data collection period has not elapsed from the start of disengagement detection processing, and the processing of steps S55 and S56 is skipped, and the processing proceeds to step S57.

At step S57, the command unit 133 judges whether to end the disengagement detection processing; that is, whether the user commanded the end of the disengagement detection processing via the input unit 114. When the user commands the end of the disengagement detection processing, the disengagement detection processing is ended, and, when the user did not command the end of the disengagement detection processing, the processing returns to step S52. In the following explanation, unless specifically indicated, a case is explained where the user did not command the end of the disengagement detection processing at step S57, and the processing returns to step S52.

Thereafter, at step S54, until it is judged that the data collection period has elapsed from the start of disengagement detection processing, the foregoing processing steps are repeated. In other words, the sensor data output from the magnetic sensor 11 during the data collection period in various situations of the vehicle, such as while running or when it is parked, is stored in the memory unit 22.

At step S54, when it is judged that the data collection period has elapsed from the start of disengagement detection processing, the processing proceeds to step S55.

At step S55, the learning processing unit 131 creates distribution data based on the sensor data stored in the memory unit 22 during the data collection period from the start of disengagement detection processing, and supplies this to the judgment unit 132. The judgment unit 132 stores the supplied distribution data in the memory unit 22.

Distribution data is data representing the distribution of the combination of the biaxial values of the x axis and y axis of the sensor data output from the magnetic sensor 11 during the data collection period. The learning processing unit 131 divides the range of the value that maybe taken by the sensor data into a prescribed unit (e.g., 10 milligauss) with respect to both axes of the x axis and y axis, and determines the quantity of sensor data having the value contained in such range from the sensor data stored in the memory unit 22 for each combination of such divided range of x axis and y axis (e.g., x axis in a range of 0 to 10 milligauss and y axis in a range of 0 to 10 milligauss). The learning processing unit 131 supplies, as the distribution data of the value of sensor data, the quantity of sensor data contained in such divided range to the judgment unit 132. In other words, distribution data is data for representing the quantity of sensor data containing in the respective grids upon partitioning the graph illustrated in Fig. 5 or Fig. 6 into a prescribed range (unit) of a grid shape with a perpendicular line in relation to the respective axes of the x axis and y axis.

The sensor data output from the magnetic sensor 11 periodically changes as shown with the curve 51 of Fig. 5 (or curve 61 of Fig. 6) pursuant to the rotation of the tire (wheel), for example, the value of sensor data stored in the memory unit 22 during the data collection period will also become a distribution close to the curve shown with the curve 51 (or curve 61). Therefore, the distribution data will become data of a value in which the quantity of sensor data containing the grids (range) above and near the curve 51 (or curve 61) will be numerous, and the quantity of sensor data contained in the grids (range) apart from the curve 51 (or curve 61) is 0 or close to 0.

At step S56, the command unit 133 turns ON the distribution data generation flag representing the creation of distribution data. Thereafter, the processing proceeds to step S57, and then returns to step S52.

After the creation of distribution data, pursuant to the processing at step S52, after the judgment unit 132 acquires the sensor data from the magnetic sensor 11, at step S53, it is judged that the distribution data generation flag is ON, and the processing proceeds to step S58.

At step S58, the judgment unit 132 compares the value of sensor data acquired with the processing at step S52 and the distribution data stored in the memory unit 22. The judgment unit 132 judges that the sensor data is of a standard value when the value of sensor data is a value of a range containing a prescribed quantity (e.g., 5 or more) of sensor data on the distribution data, and judges that the sensor data is an abnormal value when it is a value of a range containing sensor data that is less than a prescribed quantity. In other words, the standard value is a value in a range that is constantly being output from the magnetic sensor 11 during the data collection period, and, for instance, is the value in a range above and near the curve 51 of Fig. 5 (or curve 61 of Fig. 6). Meanwhile, an abnormal value is a value in a range that is not output at all or hardly output from the magnetic sensor 11 during the data collection period, and, for instance, includes the value of the point 52 (or point 62) apart from the curve 51 (or curve 61).

At step S59, the judgment unit 132 judges whether the value of sensor data is a standard value based on the results of the processing at step S58.

At step S59, when it is judged that the value of sensor data is a standard value, the processing proceeds to step S65, and the judgment unit 132, while the abnormality duration is being measured, stops the timer, and stops the measurement of the abnormality duration. Thereafter, the processing proceeds to step S57, then returns to step S52, and the subsequent processing steps are repeated.

At step S59, when it is judged that the value of sensor data is not a standard value (that it is an abnormal value), the processing proceeds to step S60.

At step S60, the judgment unit 132 judges whether the abnormality duration is being measured. When it is judged that the abnormality duration is not being measured; that is, when the sensor data that was previously a standard value becomes an abnormal value, the processing proceeds to step S64, and the judgment unit 132 activates the timer, and starts the measurement of the abnormality duration. The judgment unit 132, based on this abnormality duration, measures the time in which the value of sensor data continues to be in the state of an abnormal value. Thereafter, the processing proceeds to step S57, thereafter returns to step S52, and the subsequent processing steps are repeated.

At step S60, when it is judged that the abnormality duration is being measured; that is, when the sensor data of abnormal value from the magnetic sensor 11 is continuously output, the processing proceeds to step S61.

At step S61, the judgment unit 132 judges whether the abnormality duration exceeds the disengagement detection period. When it is judged that the abnormality duration is not exceeding the disengagement detection period; that is, when the period in which the sensor data of abnormal value from the magnetic sensor 11 being continuously output is not exceeding the disengagement detection period, processing of steps S62 and S63 is skipped, the processing thereafter proceeds to step S57, returns to step S52, and the subsequent processing steps are repeated.

At step S61, when it is judged that the abnormality duration has exceeded the disengagement detection period; that is, when the period in which the sensor data of abnormal value from the magnetic sensor 11 being continuously output is exceeding the disengagement detection period, for instance, when it is judged that the magnetism in the wheel vicinity continues to be in a state of a value (e.g., the value represented with the point 52 in Fig. 5 or point 62 in Fig. 6) that is different from the distribution in a state where the wheel is mounted as a result of the wheel being disengaged, the processing proceeds to step S62.

At step S62, the judgment unit 132 outputs a disengagement notification signal outside the disengagement detection device 1 via the output unit 13 (for notifying the user that the wheel has been stolen).

At step S63, the judgment unit 132 stops the timer, and stops the measurement of the abnormality duration. Thereafter, the processing proceeds to step S57, then returns to step S52, and the subsequent processing steps are repeated.

As described above, the disengagement of the wheel is detected by detecting that the magnetism in the wheel vicinity became a value different than the distribution in a state where the wheel is mounted due to the disengagement of the wheel based on the sensor data output from the magnetic sensor 11.

Further, the disengagement detection device may combine the foregoing fluctuation detection system and distribution data detection system and employ a combination detection system for detecting the disengagement of a wheel. As a result of combining the two systems, the disengagement detection device will be able to detect the disengagement of wheels with greater precision.

Incidentally, the configuration example of the disengagement detection device employing the combination detection system is the same as the configuration example of the disengagement detection device 101 shown in Fig. 9, and the explanation thereof is omitted.

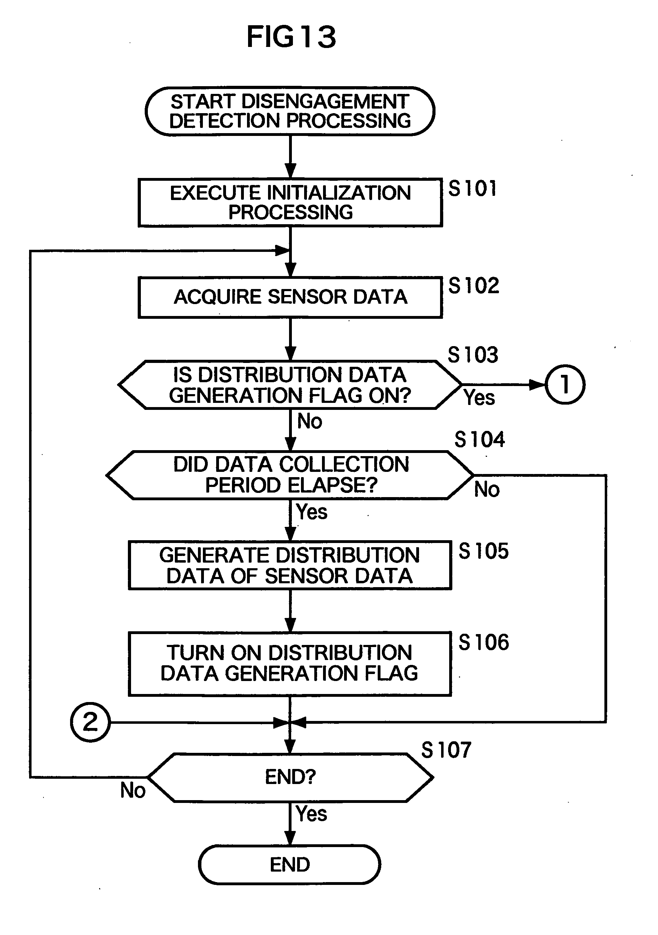

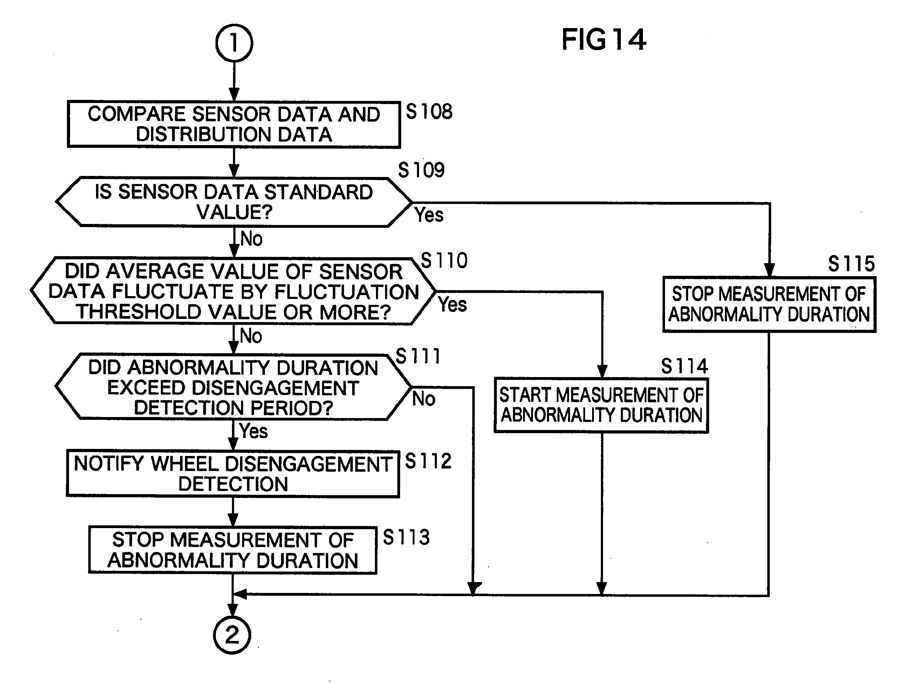

The disengagement detection processing of the combination detection system to be executed with the disengagement detection device 101 is now explained with reference to the flowcharts of Fig. 13 and Fig. 14. Incidentally, the distribution data generation processing to be executed at steps S101 to S107 in the combination detection system is the same as the distribution data generation processing to be executed at steps S51 to S57 of Fig. 11 in the distribution data detection system, and the explanation thereof is omitted. The processing to be executed by the disengagement detection device 101 after the distribution data is created is explained. Further, in the following explanation, unless specifically indicated, a case is explained where the user did not command the end of the disengagement detection processing at step S107 corresponding to the processing at S57 of Fig. 11, and the processing returns to step S102.

At step S105, after the distribution data is created, at step S106, the distribution data generation flag is turned ON, and the processing proceeds to step S107, and then returns to step S102.

At step S102, the judgment unit 132 acquires the sensor data based on the magnetism in the wheel vicinity detected with the magnetic sensor 11 from the magnetic sensor 11, and stores this in the memory unit 22.

At step S103, the command unit 133 judges whether the distribution data generation flag is turned ON. Here, since the distribution data generation flag is turned ON in the processing at step S106, the processing proceeds to step S108.

At step S108, the judgment unit 132 compares the value of sensor data acquired with the processing at step S102 and the distribution data stored in the memory unit 22 with the processing similar to step S58 of Fig. 11 in the foregoing distribution data detection system.

At step S109, the judgment unit 132 judges whether the value of sensor data is a standard value based on the results of the processing at step S108.

At step S109, when it is judged that the value of sensor data is a standard value, the processing proceeds to step S115, and the judgment unit 132, when the abnormality duration is being measured, stops the timer, and stops the measurement of the abnormality duration. Thereafter, the processing proceeds to step S107, then returns to step S102, and the subsequent processing steps are repeated.

At step S109, when it is judged that the value of sensor data is not a standard value (that it is an abnormal value), the processing proceeds to step S110.

At step S110, the judgment unit 132 compares the latest sensor data and the previous sensor data stored in the memory unit 22 with the processing similar to step S12 of Fig. 8 in the fluctuation detection system, and judges whether the value of sensor data of at least one direction among the x axis direction and y axis direction has fluctuated by the fluctuation threshold value (0.8 × |M1 - M2|) or more. When it is judged that the value of sensor data of at least one direction among the x axis direction and y axis direction has fluctuated by the fluctuation threshold value or more, the processing proceeds to step S114.

Nevertheless, at step S110, unlike the processing of step S12 of Fig. 8 in the fluctuation detection system, the variation of sensor data is not sought based on the average value of the sensor data, it is sought by comparing the values of each sensor data. This is because the distribution data is not created based on the average value of the sensor data, but rather based on each sensor data, and, since the comparison of the sensor data and distribution data at step S108 is performed against each sensor data, the processing at step S110 is also performed based on the variation of each sensor data pursuant thereto.

At step S114, the judgment unit 132 activates the timer, and starts the measurement of the abnormality duration. The judgment unit 132, based on this abnormality duration, measures the period in which the variation of sensor data, while remaining an abnormal value, continues to be in a stable state (M2 ± B) less than the fluctuation threshold value; that is, the time when the magnetism in the wheel vicinity stabilizes at the abnormal value M2. Thereafter, the processing proceeds to step S107, then returns to step S102, and the subsequent processing steps are repeated.

At step S110, when it is judged that neither value of sensor data of both directions of the x axis direction and y axis direction is fluctuating by the fluctuation threshold value or more, the processing proceeds to step S111.

At step S111, the judgment unit 132 judges whether the abnormality duration exceeded the prescribed disengagement detection period. When the measurement of the abnormality duration has not started, or when the disengagement detection period has not elapsed from the point when the measurement of abnormality duration was started, it is judged that the abnormality duration has not exceeded the disengagement detection period, and the processing at steps S112 to S113 is skipped, the processing proceeds to step S107, thereafter returns to step S102, and the subsequent processing steps are repeated.

At step S111, when it is judged that the abnormality duration exceeded the disengagement detection period; that is, when the value V of the sensor data of at least one direction among the x axis direction and y axis direction fluctuates by the fluctuation threshold value (0.8 × |M1 - M2|) or more, the value of sensor data becomes an abnormal value, and, while remaining at the abnormal value, and a stable period in which the fluctuation range of the average value is less than the fluctuation threshold value (M2 ± B) continues during the disengagement detection period, for instance, as shown with section T2 after section T0 in Fig. 4, the magnetism in the wheel vicinity will change from value M1 to value M2 (value represented with the point 52 of Fig. 5 or point 62 of Fig. 6), which is different from the distribution in a state where the wheel is mounted, due to the disengagement of the wheel, and, when it is judges as being stable at value M2, the processing proceeds to step S112.

In other words, in comparison to the distribution data detection system which judged the disengagement of the wheel when the sensor data in an abnormal value continues during the disengagement detection period regardless of whether the value of sensor data is stable, the combination system judges the disengagement of the wheel when the value of sensor data fluctuates by the fluctuation threshold value or more and becomes an abnormal value, and such value in a stable state continues during the disengagement detection period. Therefore, a more accurate detection is possible.

At step S112, the judgment unit 132 outputs a disengagement notification signal outside the disengagement detection device 101 via the output unit 13.

At step S113, the judgment unit 132 stops the timer, and stops the measurement of the abnormality duration. Thereafter, the processing proceeds to step S107, then returns to step S102, and the subsequent processing steps are repeated.

Incidentally, during the measurement of the abnormality duration, at step S110, when it is judged that the average value of the sensor direction of at least one direction among the x axis direction and y axis direction fluctuated by the fluctuation threshold value or more; that is, when the value of sensor data is fluctuating unstably in short cycles in an abnormal value, it is judged that the magnetism in the wheel vicinity is unstable due to reasons other than the disengagement of the wheel, and the processing proceeds to step S114, the timer is reset, and the remeasurement of the abnormality duration is started.

As described above, the magnetism in the wheel vicinity changing significantly in comparison to the stationary state due to the disengagement of the wheel based on the sensor data output from the magnetic sensor 11, and the disengagement of the wheel is detected by detecting that such changed state became stable.

## Claims

1. A disengagement detection device for detecting the disengagement of a wheel from a vehicle, comprising:
detectionmeans for detecting the magnetism inside said vehicle at or near said wheel mounted on said vehicle; and
judgment means for judging the disengagement of said wheel from said vehicle based on whether the value of said magnetism detected with said detection means changed by a prescribed threshold value or more, and whether a first stable state centered around a first value changed to a second stable state centered around a second value.

2. A disengagement detection device according to claim 1, wherein said detection means detects magnetisms in a plurality of different directions, and said judgment means judges the disengagement of said wheel from said vehicle based on the comparison of the value of said magnetisms detected with said detection means, and the distribution of the value of the magnetisms detected previously with said detection means in a state where said wheel is mounted on said vehicle.

3. A disengagement detection device for detecting the disengagement of a wheel from a vehicle, comprising:
detection means for detecting magnetisms in a plurality of different directions inside said vehicle at or near said wheel mounted on said vehicle; and
judgment means for judging the disengagement of said wheel from said vehicle based on the comparison of the value of said magnetisms detected with said detection means, and the distribution of the value of the magnetisms detected previously with said detection means in a state where said wheel is mounted on said vehicle.

4. A disengagement detection device according to any one of claims 1 to 3, further comprising notification means for notifying that the disengagement of said wheel from said vehicle has been detected with said judgment means.

5. A disengagement detection method for detecting the disengagement of a wheel from a vehicle, comprising:
a detection step for detecting the magnetism inside said vehicle at or near said wheel mounted on said vehicle; and
a judgment step for judging the disengagement of said wheel from said vehicle based on whether the value of said magnetism detected by the processing in said detection step changed by a prescribed threshold value or more, and whether a first stable state centered around a first value changed to a second stable state centered around a second value.

6. A disengagement detection method for detecting the disengagement of a wheel from a vehicle, comprising:
a detection step for detecting magnetisms in a plurality of different directions inside said vehicle at or near said wheel mounted on said vehicle; and
a judgment step for judging the disengagement of said wheel from said vehicle based on the comparison of the value of said magnetisms detected by the processing in said detection step, and the distribution of the value of the magnetisms detected previously by the processing in said detection step in a state where said wheel is mounted on said vehicle.
